# EUROPEAN PATENT SPECIFICATION

(11) **EP 3 023 680 B1**
(45) Date of publication and mention of the grant of the patent: **25.12.2019**
(21) Application number: 14193884.5
(22) Date of filing: 19.11.2014
(51) Int. Cl.: F16C 43/04, F16C 19/54, F16L 37/23, F16L 27/08, F16L 25/00

(54) **Quick coupling comprising improved ball bearing**
Schnellkupplung mit verbessertem Kugellager
Raccord rapide comprenant un roulement à billes améliorée

(43) Date of publication of application: 25.05.2016
(73) Proprietor: FASTER S.r.l., 26027 Rivolta d'Adda (IT)
(72) Inventor: Polgati, Igor, 26020 Agnadello (IT); Rossetti, Daniele, 26025 Pandino (IT)
(74) Representative: Torti, Carlo Maria Emilio

(56) References cited:
- WO-A1-99/36721
- US-A- 2 382 375
- US-A- 3 408 095
- US-A- 5 547 233

## Description

### FIELD OF THE INVENTION

The present invention relates to a female quick coupling for pressurized fluids characterized in that it comprises an improved ball bearing.

More in particular, the quick coupling according to the present invention is of the type comprising at least two bodies, i.e. a first main block in which a second block is inserted and locked by means of a screw coupling, and the second block, in which the hydraulic line is axially defined, which comprises therein a plurality of components necessary for the operation and the fluid-dynamics of the coupling known in the prior art.

The first and the second block are free to turn with respect to each other about an axial symmetry axis to facilitate the coupling and uncoupling operations of the male coupling by the operator.

### PRIOR ART

Quick screw couplings are known in the sector of quick couplings for the connection of hydraulic lines.

In this type of coupling, the female coupling comprises two blocks which can be turned with respect to each other about an axial rotation axis, so as to be able to facilitate the assembly and disassembly operations of the male coupling by the user.

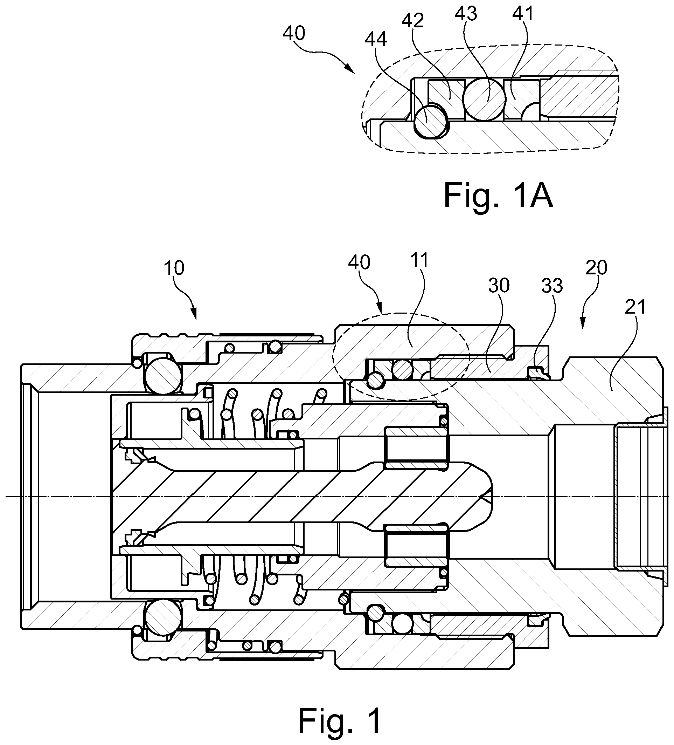

Figures 1, 1A and figures from 2A to 2F show a female screw coupling of the type known in the prior art and the steps of assembling the ball bearing components, respectively.

More in particular and with reference to the mentioned figures, the female coupling thus comprises at least one first block 10, which comprises, in turn, the ball body 11, and a second block 20, comprising an adapter body 21 and a plurality of other internal components, as known in the prior art.

A ball bearing, generically indicated with reference numeral 40, is provided between said first block 10 and said second block 20, which ball bearing comprises, in turn, a pair of slewing rings 41, 42 and a plurality of balls 43 inserted between said two slewing rings 41, 42.

Said two slewing rings are kept in position by a ring nut 30, which is interposed between said adapter 21 and said ball body 11. More in particular, according to the prior art, the ring nut 30 is attached to the ball body 11 by means of a threading, preferably with the addition of thread lock of the LOCTITE type which is used to prevent the undesired loosening of the ring nut 30 and thus the possible tampering of the bearing. In this manner, however, the bearing cannot be reached or even maintained by the user.

Moreover, an elastic ring 44 is provided to block the slewing rings with respect to the adapter body 21 further. The elastic ring 44 is preferably housed in a seat appropriately obtained in said adapter 21.

By virtue of the configuration illustrated above and the presence of the bearing 40, the adapter body may turn about the longitudinal axis of the coupling with respect to said ball bearing 11 in the female coupling of the type illustrated thereto.

The bearing 40 is protected from the dirt coming from the outside by virtue of the presence of an oil scraper ring 33 placed between said adapter 21 and said ring nut 30.

However, the bearing can be reached by the dirt coming from the inside of the coupling, i.e. from the left side of the bearing itself referring to the illustration shown in figure 1.

The female coupling and the bearing 40 of known type of the prior art have some drawbacks.

In particular, the configuration of the bearing 40, as currently in use and described thereto, which comprises a pair of slewing rings 41, 42, which retain a plurality of balls 43, has considerable manufacturing and assembly criticalities which negatively affect manufacturing time, and ultimately the cost-effectiveness of the product itself.

Firstly, it is worth noting that the slewing rings 41, 42 are obtained from a full steel bar for hardening and tempering, e.g. 39NiCrMo3. After processing with machine tools, in particular after turning, the part is subjected to grinding on magnets to prevent ovalizations, and is then subjected to a vacuum hardening thermal treatment, which further prevents the possibility of the bar of being deformed in service, and finally it is subjected to a surface treatment with ZnCrIII. The slewing ring production process is thus very costly from the economic point of view in addition to being very long. The entire production process may take up to 5 weeks for the only manufacturing of the finished slewing rings ready for assembly.

However, the assembly process of the female coupling in itself of the type known in the prior art also causes criticalities.

Indeed, with particular reference to figures from 2A to 2F, the steps of assembling of the bearing 40 are as follows.

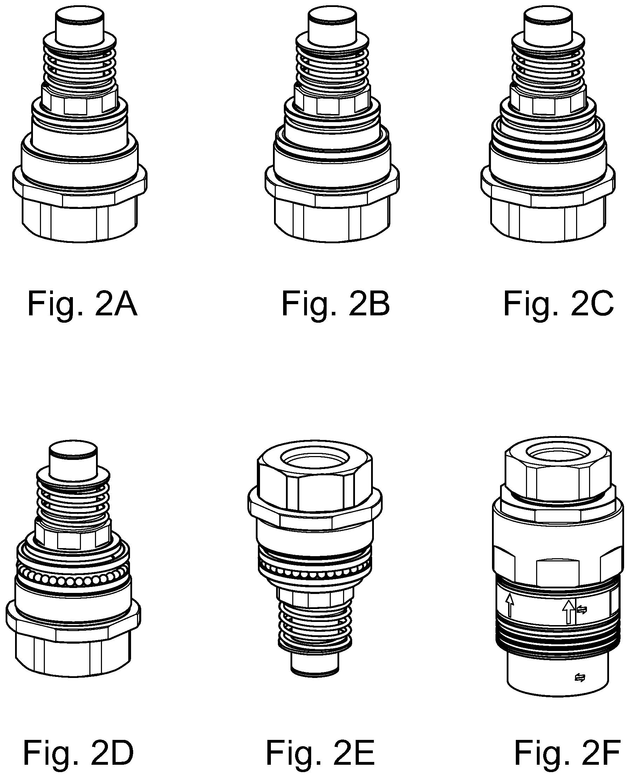

The second block 20 with adapter 21 is placed with the end adapted to house the male coupling facing downwards, as shown in figure 2A.

As shown in figure 2B, the two slewing rings 41, 42 and the elastic ring 44 are inserted, and after this the worker manually inserts the balls inside the two slewing rings after having counted them with the aid of a ball counting tool specifically dimensioned to contain the number of balls necessary for the size of the coupling to be assembled. The situation is shown in figure 2D.

Being careful for not let the balls escape, the second block 20 is turned as shown in figure 2E and inserted in the first block 10 closing the coupling. The ring nut 30 is now inserted and screwed into the ball body 11, the thread is locked with LOCTITE, and tightened with a specific torque wrench to the predetermined torque value.

From the above, it is apparent that the assembly process of the bearing on the female coupling is a complex process, which must be performed entirely by hand and for which a high degree of attention, and consequently of specialization, is necessary. The step of assembling of the bearing considerably affects the overall time necessary for the assembly of the female coupling, and thus reducing the assembly times of the bearing allows to considerably reduce the time needed to manufacture the entire coupling.

A female screw coupling corresponding to the preamble of claim 1 is known from document US 3 408 095A.

### SUMMARY OF THE INVENTION

The present invention relates to a female screw coupling according to claim 1 and a method for assembling same according to claim 3. It is the main task of the present invention to provide a female screw coupling, i.e. of the screw type, i.e. of the type comprising a bearing which allows a relative rotation of two parts of the coupling about the longitudinal axis of the coupling, which allows to overcome the drawbacks which afflict the solutions of known type. In the scope of this task, it is the object of the present invention to provide a female coupling which comprises an improved bearing, which allows the same sliding efficacy during the connection and disconnection of the male coupling as the solutions of known type, but which at the same time allows to considerably simplify the assembly operations of the bearing and to drastically reduce the time needed for the assembly of the bearing and thus of the coupling.

It is a further object of the present invention to provide a female screw coupling which comprises a bearing which is more protected from dirt in the conditions of use.

It is a further object of the present invention to provide a female coupling of the screw type which comprises a bearing which can be easily accessed by the user for maintenance operations.

This task and the other objects which will be more apparent from the description below are reached by a female coupling of the screw type as claimed in the accompanying claims which form an integral part of the present description.

### LIST OF FIGURES

Further features and advantages of the present invention will be more apparent in the following detailed description provided by way of non-limitative example and illustrated in the accompanying figures, in which:
- Figure 1 shows a vertical longitudinal plane section view of a female coupling of the type known in the prior art, to which the present invention refers;
- Figure 1A shows a detail in figure 1, in particular it shows the bearing of known type according to the prior art;
- Figures 2A to 2F show the steps of assembling of the ball bearing of the known type on the coupling of known type;
- Figure 3 shows a vertical longitudinal plane section view of a female coupling useful to understand the present invention;
- Figure 3A shows a detail in figure 3, in particular it shows a bearing useful to understand the present invention;
- Figures from 4A to 4C show the steps of assembling the improved ball bearing on the female coupling according to the present invention.

### DETAILED DESCRIPTION

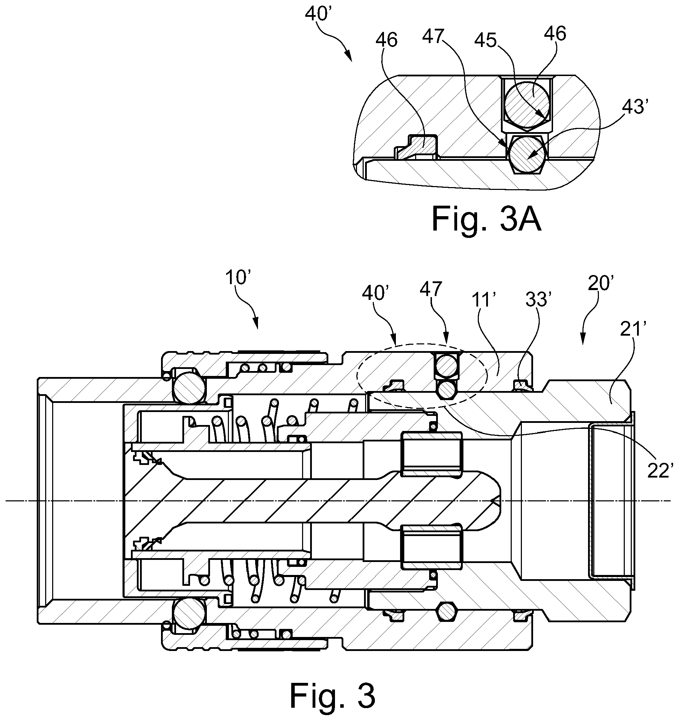

With reference in particular to appended figure 3 and to the detail in figure 3A, the female coupling according to the present invention is of the type comprising a first block **10',** which comprises, in turn, a ball body **11',** and a second block **20',** comprising an adapter body **21'.**

A ball bearing, generically indicated by reference numeral **40',** which comprises, in turn, a plurality of balls **43'**,is provided between said first block **10'** and said second block **20'.**

A housing recess **22'** of said balls **43'** is appropriately provided on the outer surface of said adapter body **21'.**

Advantageously, said recess **22,** which circumferentially crosses said adapter body 21', is thermally treated by means of an induction hardening process so as to avoid any wear phenomena caused by friction.

As apparent from the section in figure 3, and in particular in figure 3A, the bearing **40'**of the coupling according to the present invention does not require ball bearing slewing rings.

Similarly, the female coupling according to the present invention does not require the ring nut **30** which is needed, in the solution of known type, between said ball body **11** and said adapter body **21,** and similarly the elastic ring **44** which locked the bearing in position is eliminated.

A radial through hole **47** is appropriately provided in said ball body 11' in order to allow inserting the bearing balls **43'** in their seat.

The diameter of said through hole **47** may be slightly larger than the diameter of the balls **43'** and the through hole is closed by closing means **45.**

Said closing means of said through hole **47** comprise an expander type plug **45,** of known type, which is kept in seat by interference by inserting a ball **46,** thus keeping the balls **43'** in their seat at the same time.

As described thereto, the female coupling according to the present invention thus comprises a bearing of improved type which implies many advantages.

A first advantage is that the bearing no longer requires slewing rings, which translates into lower manufacturing costs, and which also allows to reduce the final cost of the coupling for the user and/or to increase the profit margin of the product.

A second advantage again linked to the elimination of the slewing ring is given by the shorter time needed for manufacturing the coupling because the long manufacturing times of the slewing rings are eliminated.

A further advantage consists in simplifying the assembly operations because the bearing is assembled once the coupling is already assembled, i.e. when the second block **20'** comprising said adapter **21'** has already been inserted in said first block **10'** comprising said ball body **11',** simply by inserting the balls **43'** through said through hole **47.**

The balls are counted with the aid of a tool specifically dimensioned to contain the number needed for the size of the coupling to be assembled through the radial through hole **47.**

The radial hole **47** is thus closed by closing the expander plug **45** which is forced into the ball body **11',** in particular into said radial hole **47,** by means of a specific punch.

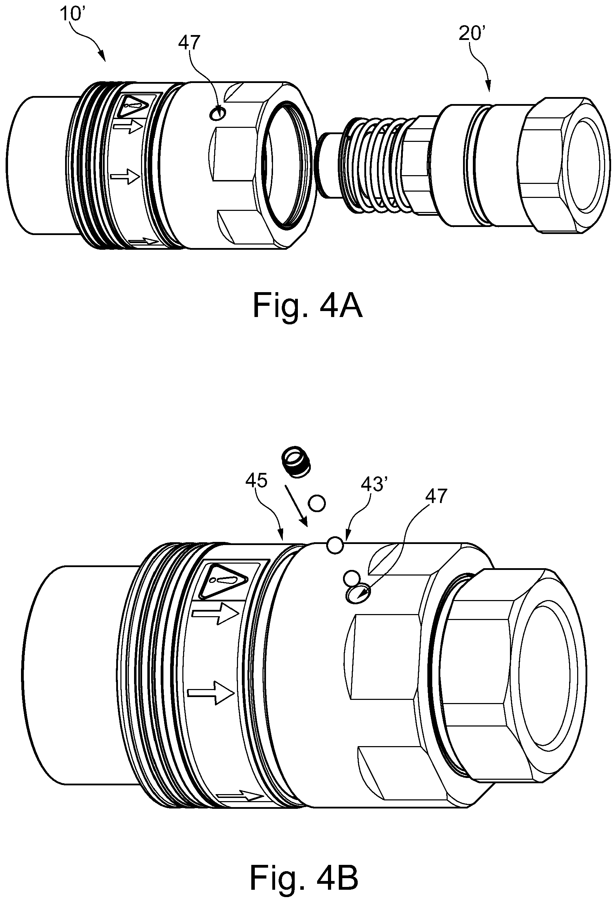

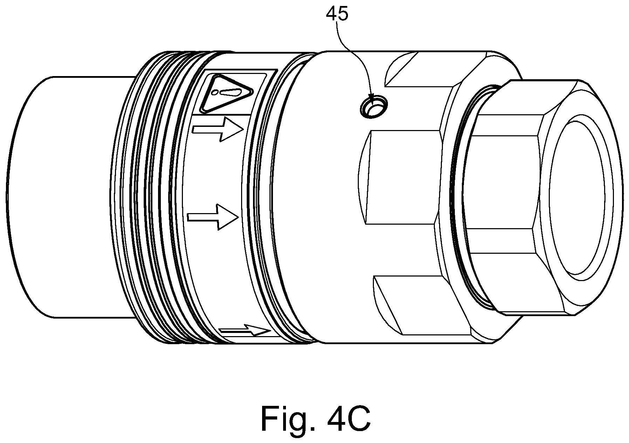

The sequence of the steps of assembling is shown in figures 4A-4C.

With reference to the detail in figure 3A a second oil scraper **46** operating again between said ball bearing **11'** and said adapter **21'** and placed with respect to the bearing **40'** towards the end of said adapter **21',** in addition to a first oil scraper **33'** operating between said ball body **11'** and said adapter **21'** and placed, with respect to the bearing **40',** towards the opposite end of said coupling, are further provided on said ball body **11'.**

By virtue of the presence of the two oil scrapers **33', 46,** the bearing **40'** is protected from the dirt coming from the outside and from the inside of the coupling itself.

By virtue of the improved bearing **40'** described hereto, the female coupling according to the present invention reaches the set task and objects.

More in detail, sensitivity to dirt is improved while maintaining the sliding features during the steps of connecting and disconnecting of the male coupling unchanged, thus simultaneously solving, as shown, the criticalities during the step of manufacturing, in particular by enormously simplifying the steps of assembling of the bearing itself, with the considerable advantages of abbreviating manufacturing times and of reducing the number of components, and, consequently, of improving manufacturing cost-effectiveness, and in terms of improved operative conditions of the assembly operators, which require a lower level of attention, and thus imply a lower stress level and better movement ergonomics.

Not last, the bearing of the coupling according to the invention can be easily maintained by the end user simply by removing the expander plug without needing to disassemble the coupling, even partially.

## Claims

1. A female screw coupling comprising a first block (10'), which comprises, in turn, a ball body (11'), and a second block (20'), which comprises, in turn, an adapter body (21') at least partially housed inside said first block (10') for the fluid connection to a male coupling, and further comprising a ball bearing (40') provided between said first block (10') and said second block (20'), said ball bearing (40') comprising a plurality of balls (43') interposed between said first block (10') and said second block (20') to allow the relative rotation of said first block (10') and said second block (20'), wherein said adapter body (21') comprises at least one housing recess (22) at the outer surface thereof and circumferentially crossing said adapter (21'), wherein said balls (43') are at least partially housed in said recess (22), said female screw coupling comprising a radial through hole (47) in said ball body (11') adapted to allow to insert said balls (43') of said ball bearing (40') into their operative position in said housing recess (22), wherein said female screw coupling further comprises closing means (45) for closing said through hole (47), **characterized in that** said closing means (45) comprise an expander type plug (45), and **in that** said expander type plug (45) is kept in seat by interference by a ball (46).

2. A female coupling according to the preceding claim, **characterized in that** it further comprises a first oil scraper (33') operating between said ball bearing (11') and said adapter (21') and placed with respect to the bearing (40') towards the end of said adapter (21') intended to couple with a male coupling, and a second oil scraper (46), again operating between said ball body (11') and said adapter (21') and placed, with respect to the bearing (40'), towards the opposite end of said coupling on said ball body (11').

3. A method for assembly a female screw coupling according to one of claims 1 and 2, **characterized in that** it comprises the steps of:
- assembling said first block (10') and said second block (20') to each other in such a way that said adapter (21') is at least partially housed in said first block (10');
- inserting said balls (43') of said ball bearing (40') in said housing recess (22) of said adapter body (21'), thus between said first block (10') and said second block (20'), through said radial through hole (47);
- closing said through hole (47) by means of said expander type plug (45);
- inserting said ball (47) into said expander type plug (45), so as to keep said expander type plug (45) in said through hole (47) by interference.

## Patentansprüche

1. Innengewindekupplung mit einem ersten Block (10'), der wiederum einen Kugelkörper (11') umfasst, und einem zweiten Block (20'), der wiederum einen Adapterkörper (21') umfasst, der zumindest teilweise in dem ersten Block (10') für die Fluidverbindung mit einer Außenkupplung untergebracht ist, und ferner umfassend ein Kugellager (40'), das zwischen dem ersten Block (10') und dem zweiten Block (20') vorgesehen ist, wobei das Kugellager (40') eine Vielzahl von Kugeln (43') umfasst, die zwischen dem ersten Block (10') und dem zweiten Block (20') angeordnet sind, um die relative Drehung des ersten Blocks (10') und des zweiten Blocks (20') zu ermöglichen, wobei der Adapterkörper (21') mindestens eine Gehäuseaussparung (22) an der Außenfläche davon umfasst und den Adapter (21') in Umfangsrichtung kreuzt, wobei die Kugeln (43') zumindest teilweise in der Aussparung (22) untergebracht sind, wobei die Schraubenkupplung eine radiale Durchgangsbohrung (47) in dem Kugelkörper (11') umfasst, die so angepasst ist, dass sie es ermöglicht, die Kugeln (43') des Kugellagers (40') in ihre Betriebsposition in der Gehäuseaussparung (22) einzusetzen, wobei die Innengewindekupplung ferner eine Verschlusseinrichtung (45) zum Verschließen der Durchgangsbohrung (47) umfasst, **dadurch gekennzeichnet, dass** die Verschlusseinrichtung (45) einen spreizdübelartigen Zapfen (45) umfasst, und dass der spreizdübelartige Zapfen (45) durch Pressung mit einer Kugel (46) im Sitz gehalten wird.

2. Innenkupplung nach dem vorhergehenden Anspruch, **dadurch gekennzeichnet, dass** sie ferner einen ersten Ölabstreifer (33') umfasst, der zwischen dem Kugellager (11') und dem Adapter (21') im Einsatz ist und in Bezug auf das Lager (40') zum Ende des Adapters (21') angeordnet ist, der dazu bestimmt ist, mit einer Außenkupplung gekoppelt zu werden, und einen zweiten Ölabstreifer (46), der wiederum zwischen dem Kugelkörper (11') und dem Adapter (21') im Einsatz ist und in Bezug auf das Lager (40') zum gegenüberliegenden Ende der Kupplung am Kugelkörper (11') angeordnet ist.

3. Verfahren zum Zusammenbau einer Innengewindekupplung nach einem der Ansprüche 1 und 2, **dadurch gekennzeichnet, dass** es die folgenden Schritte umfasst:
- Zusammenbauen des ersten Blocks (10') und des zweiten Blocks (20') miteinander, so dass der Adapter (21') zumindest teilweise in dem ersten Block (10') untergebracht ist;
- Einsetzen der Kugeln (43') des Kugellagers (40') in die Gehäuseaussparung (22) des Adapterkörpers (21'), also zwischen dem ersten Block (10') und dem zweiten Block (20'), durch die radiale Durchgangsbohrung (47);
- Schließen der Durchgangsbohrung (47) mittels des spreizdübelartigen Zapfens (45);
- Einsetzen der Kugel (47) in den spreizdübelartigen Zapfen (45), um den spreizdübelartigen Zapfen (45) durch Pressung in der Durchgangsbohrung (47) zu halten.

## Revendications

1. Un accouplement à vis femelle comprenant un premier bloc (10'), qui comprend, à son tour, un corps de bille (11'), et un deuxième bloc (20'), qui comprend, à son tour, un corps d'adaptateur (21') logé au moins partiellement à l'intérieur dudit premier bloc (10') pour le raccordement fluidique à un accouplement mâle, et comprenant en outre un roulement à billes (40') disposé entre ledit premier bloc (10') et ledit deuxième bloc (20'), ledit roulement à billes (40') comprenant une pluralité de billes (43') interposées entre ledit premier bloc (10') et ledit deuxième bloc (20') pour permettre la rotation relative dudit premier bloc (10') et dudit deuxième bloc (20'), ledit corps d'adaptateur (21') comprenant au moins un évidement de logement (22) au niveau de la surface externe de ce dernier et croisant circonférentiellement ledit adaptateur (21'), lesdites billes (43') étant au moins partiellement logées dans ledit évidement (22), ledit accouplement à vis femelle comprenant un trou traversant radial (47) dans ledit corps de bille (11') conçu pour permettre l'insertion desdites billes (43') dudit roulement à billes (40') dans leur position fonctionnelle dans ledit évidement de logement (22), ledit accouplement à vis femelle comprenant en outre un moyen de fermeture (45) pour fermer ledit trou traversant (47), **caractérisé en ce que** ledit moyen de fermeture (45) comprend une fiche de type expandeur (45), et **en ce que** la fiche de type expandeur (45) est maintenue en place par interférence par une bille (46).

2. Un accouplement femelle selon la revendication précédente, **caractérisé en ce qu'**il comprend en outre un premier racleur d'huile (33') fonctionnant entre ledit roulement à billes (11') et ledit adaptateur (21') et placé par rapport au roulement (40') vers l'extrémité dudit adaptateur (21') destiné à s'accoupler avec un accouplement mâle, et un deuxième racleur d'huile (46), fonctionnant lui aussi entre ledit corps de bille (11') et ledit adaptateur (21') et placé, par rapport au roulement (40'), vers l'extrémité opposée dudit accouplement sur ledit corps de bille (11').

3. Un procédé d'assemblage d'un accouplement à vis femelle selon l'une des revendications 1 et 2, **caractérisé en ce qu'**il comprend les étapes consistant à :
- assembler ledit premier bloc (10') et ledit deuxième bloc (20') l'un à l'autre de manière à ce que ledit adaptateur (21') soit au moins partiellement logé dans ledit premier bloc (10') ;
- insérer lesdites billes (43') dudit roulement à billes (40') dans ledit évidement de logement (22) dudit corps d'adaptateur (21'), ainsi entre ledit premier bloc (10') et ledit deuxième bloc (20'), à travers ledit trou traversant radial (47) ;
- fermer ledit trou traversant (47) au moyen de ladite fiche de type expandeur (45) ;
- insérer ladite bille (47) dans ladite fiche de type expandeur (45), de manière à maintenir ladite fiche de type expandeur (45) dans ledit trou traversant (47) par interférence.
